# EUROPÄISCHE PATENTSCHRIFT

(11) **EP 4 281 385 B1**
(45) Veröffentlichungstag und Bekanntmachung des Hinweises auf die Patenterteilung: **29.07.2026**
(21) Anmeldenummer: 22728142.5
(22) Anmeldetag: 06.05.2022
(51) Int. Cl.: B65D 30/08, B65D 30/18, B65D 30/24, B65D 33/02, B65D 65/46

(54) **PAPIERSACK UND DESSEN VERWENDUNG**
PAPER BAG AND ITS USE
SAC EN PAPIER ET SON UTILISATION

(30) Priorität: 21.05.2021 DE 202021102803 U
(43) Veröffentlichungstag der Anmeldung: 29.11.2023
(73) Patentinhaber: dy-pack Verpackungen Gustav Dyckerhoff GmbH, 57482 Wenden-Gerlingen (DE)
(72) Erfinder: DYCKERHOFF, Wilhelm A., 57489 Drolshagen (DE); LISEK, Eduard, 57489 Drolshagen (DE)
(74) Vertreter: Lorenz Seidler Gossel Part. mbB
(86) Internationale Anmeldenummer: PCT/EP2022/062265
(87) Internationale Veröffentlichungsnummer: WO 2022/243066

(56) Entgegenhaltungen:
- EP-A1- 3 795 745
- WO-A1-2015/169424
- WO-A1-2018/202340
- CN-A- 108 657 592
- CN-U- 212 314 331
- US-A- 2 543 858

## Beschreibung

Die Erfindung betrifft einen Sack für feuchte und biologisch aktive Schüttgüter, wie beispielsweise Blumenerde. Handelsübliche Blumenerde weist typischer Weise eine Restfeuchte im Bereich von 20-25 Gewichts-% auf und ist ein biologisch aktives und organisches Material, was besondere Anforderungen an die Verpackung stellt.

Vorbekannt ist die Verpackung von Blumenerde in Kunststoffsäcken, insbesondere aus Polyethylen (PE). Derartige Säcke sind aufgrund ihrer Beschaffenheit aus Kunststoff nicht umweltfreundlich, was zusehends unerwünscht ist.

Vorbekannt sind des Weiteren Papiersäcke für die Verpackung von trockenen Schüttgütern. Zur Herstellung derartiger Säcke werden üblicher Weise ein- oder mehrlagige Papierbahnen in einer sog. Schlauchmaschine zu einem Endlosschlauch geformt und in Schlauchstücke geeigneter Länge vereinzelt, aus denen schließlich der Sack gebildet wird, z.B. mittels einer Kreuz- oder Blockbodenfaltung. Im Zuge Sackherstellung wird das Papier an geeigneten Stellen verklebt, um die Sackform zu fixieren. Die vorbekannten Papiersäcke sind jedoch für die Verpackung von feuchten Schüttgütern ungeeignet, unter anderem weil Feuchtigkeit aus dem Füllgut in das Sackmaterial und die Verklebungen eindringt und die Festigkeit und Stabilität des Sacks beeinträchtigt.

Die Druckschrift CN 108 657 592 A beschreibt einen Verpackungsbeutel aus Papier für UV-härtende Tinte mit einer UV-Licht abschirmenden Schicht. Die Druckschrift WO 2015/169424 A1 beschreibt einen Papiersack und einen Leim für dessen Herstellung, wobei der Leim eine stärkehaltige wässrige Lösung mit einem weiteren beigemengten Klebstoff ist.

Vor diesem Hintergrund ist es Aufgabe der vorliegenden Erfindung, einen umweltfreundlichen Papiersack für feuchte Blumenerde und ähnliche Schüttgüter vorzuschlagen, der eine hinreichend stabile, gut handhabbare Verpackung gewährleistet. In diesem Rahmen wird bevorzugt ein Papiersack für Verpackung, Transport und Lagerung von Schüttgütern mit einer Restfeuchte im Bereich von 20 - 25 Gewichts-% angestrebt, in dem die Eigenschaften des Füllguts möglichst gut erhalten bleiben und z.B. Schimmelbildung oder Austrocknung vermieden wird.

Erfindungsgemäß wird die Aufgabe gelöst durch einen Papiersack gemäß Anspruch 1. Vorteilhafte Ausgestaltungen ergeben sich aus den Unteransprüchen.

Der erfindungsgemäße Papiersack ist aus einem mindestens zwei Papierlagen umfassenden Schlauchstück gebildet. Vorteilhafterweise ist der Papiersack aus genau zwei Papierlagen oder genau drei Papierlagen hergestellt. Bei dem erfindungsgemäßen Sack sind die bei der Sackherstellung typischerweise erforderlichen Verklebungen des Sackmaterials mit einem biologisch abbaubaren Klebstoff ausgeführt. Damit wird der Sack insgesamt umweltfreundlicher. Erfindungsgemäß ist vorgesehen, dass die innerste Papierlage des Schlauchstücks auf ihrer dem Sackinnenraum abgewandten Außenseite eine wasserabweisende Beschichtung aufweist. Hierbei kann es sich vorzugsweise um eine PE-Beschichtung handeln. Mindestens eine Papierlage weist mindestens auf ihrer Innenseite, die dem Sackinnenraum zugewandt ist, eine verdunkelnde, vorzugsweise schwarze Färbung auf. Verdunkelnd in diesem Sinne ist jede Färbung, die das Papier in Vergleich zu seiner natürlichen Farbe dunkler macht. Als verdunkelnde Färbung kann beispielsweise dunkle oder schwarze Farbe auf die Innenseite einer Papierlage aufgedruckt sein. Vorteilhafterweise kann die verdunkelnde Farbe auf der Innenseite der innersten Papierlage, die mit dem Füllgut in Kontakt steht, aufgebracht sein.

Der erfindungsgemäße Sack ermöglicht eine umweltfreundliche und gleichzeitig stabile Verpackung für feuchte Schüttgüter wie z. B. Blumenerde. Insbesondere ist es möglich, den Kunststoffanteil unter 5 % zu halten, so dass der Sack nach den maßgeblichen Bestimmungen als reiner Papiersack deklariert werden kann. Mit der dunklen bzw. schwarzen Bedruckung auf der Innenseite einer Papierlage kann eine biologische Aktivität des Füllgutes vermieden bzw. deutlich reduziert werden. Durch die dunkle bzw. schwarze Bedruckung wird Licht vom Eindringen in das Sackinnere abgehalten. Dadurch wird biologische Aktivität im Füllgut vermindert, die durch Licht stimuliert wird. Der Effekt ist ähnlich dem Abdecken von im Freien gelagerten biologischen Material mit einer schwarzen Silofolie. Auch dadurch wird die biologische Aktivität des abgedeckten Materials vermindert. Die Aufbringung der wasserabweisenden Beschichtung auf der Außenseite der innersten Papierlage erlaubt es, auf deren Innenseite auf eine solche Beschichtung zu verzichten. Dadurch kann die Innenseite mit herkömmlichem biologisch abbaubaren Klebstoff verklebt werden. Andernfalls wäre ein ggf. nicht biologisch abbaubarer Spezialklebstoff erforderlich. Durch die wasserabweisende Beschichtung auf der Außenseite der innersten Papierlage wird vermieden, dass Feuchtigkeit nennenswerten Umfang von innen in die äußeren Papierlagen vordringen kann. Dadurch können die äußeren Papierlagen trocken gehalten werden und so für Festigkeit und Stabilität des Sackes sorgen. So wird durch eine beschichtungsfreie Innenseite der innersten Materiallage eine gute Verklebung des Sackes ermöglicht, während durch die Beschichtung der Außenseite eine Durchfeuchtung weiterer Sacklagen vermieden wird. Weiter wird durch die wasserabweisende Beschichtung vermieden, dass Wasser von außen in das Sackinnere und das Füllgut eindringt. Damit kann vermieden werden, dass das Füllgut gegenüber dem Einfüllzustand stärker durchfeuchtet. Insgesamt kann also einerseits eine Austrocknung und andererseits eine stärkere Durchfeuchtung des Füllguts vermieden werden. Damit ergibt sich ein stabiler und umweltfreundlicher Papiersack für Verpackung, Lagerung und Transport von Blumenerde und vergleichbar feuchten Schüttgütern, wobei die Restfeuchte über die typischerweise relevanten Zeiträume stabil gehalten werden kann und andere nachteilige Veränderungen des Füllguts vermieden werden können.

Der erfindungsgemäße Sack weist an einem Ende des Schlauchstücks einen Kreuzoder Blockboden auf.

Vorteilhafterweise ist in den Boden, der sich beim Tragen des Sackes typischerweise unten befindet, ein Innenriegel eingesetzt, um den Boden zu verstärken. Besonders vorteilhaft ist es bei einem Kreuz- oder Blockboden, wenn der Innenriegel als blattförmige Materiallage in die offene Bodenfaltung eingeklebt wird. Bevorzugt besteht der Innenriegel ebenfalls aus Papier, um eine hohe Umweltfreundlichkeit zu erreichen. Weiter bevorzugt ist erfindungsgemäß vorgesehen, dass der Innenriegel auf seiner dem Sackinnenraum abgewandten Außenseite mit einer wasserabweisenden Beschichtung versehen ist, vorzugsweise einer PE-Beschichtung. Dadurch kann auch im Bodenbereich vermieden werden, dass außerhalb des Innenriegels befindliche Materiallagen von innen durchfeuchten. Auf der dem Sackinnenraum zugewandten Innenseite des Innenriegels kann auf eine wasserabweisende Beschichtung verzichtet und so eine gute Verklebung mit biologisch abbaubarem Klebstoff ermöglicht werden. Insbesondere ist es auf diese Weise möglich, dass der Innenriegel mit seiner Seite ohne wasserabweisende Beschichtung über einen größeren Flächenbereich auf die ebenfalls keine wasserabweisende Beschichtung aufweisende Innenseite der innersten Papierlage aufgeklebt wird, wodurch eine besonders feste Bodenverklebung erreicht werden kann, die den Stabilitätsanforderungen des feuchten und schweren Füllguts genügt. Weiter bevorzugt ist vorgesehen, dass der Innenriegel auf seiner dem Sackinnenraum zugwandten Innenseite eine verdunkelnde, vorzugsweise schwarze Färbung aufweist, um im Bereich des Bodens einen Lichteinfall besser zu verhindern. Die verdunkelnde Färbung kann durch eine Bedruckung mit dunkler oder schwarzer Farbe hergestellt sein.

Vorteilhafterweise enthält der biologisch abbaubare Klebstoff Stärkeleim, vorzugsweise Kartoffelstärkeleim. Stärkeleim, insbesondere Kartoffelstärkeleim ist ein vergleichsweise günstiger Klebstoff, der bei Papier eine gute Klebewirkung gewährleistet. In einer besonders bevorzugten Ausgestaltung besteht der biologisch abbaubare Klebstoff vollständig aus reinem Stärkeleim. In einer anderen bevorzugten Ausgestaltung ist dem biologisch abbaubaren Klebstoff ein feuchtigkeitsstabil verklebendes Additiv, vorzugsweise Dispersionsleim, beigemengt. Stärkeleim hat den Nachteil, dass er sich durch Feuchtigkeit bzw. Wasser in einem gewissen Umfang löst und damit die Festigkeit der Verklebung nachlässt. Dem kann entgegengewirkt werden, indem ein feuchtigkeitsstabil verklebendes Additiv beigemengt ist. Unter einem feuchtigkeitsstabil verklebenden Additiv wird ein Additiv verstanden, dessen Klebewirkung bei Feuchtigkeit nicht oder nur in geringem Umfang nachlässt. Ein derart feuchtigkeitsstabil verklebendes Additiv kann beispielsweise eine Beimengung von Dispersionsleim zu einem Stärkeleim sein. Besonders vorteilhaft ist das feuchtigkeitsstabil verklebende Additiv dem biologisch abbaubaren Klebstoff mit einem Anteil von höchstens 10 %, weiter bevorzugt von höchstens 7 %, beigemengt. Mit einem derartigen Anteil kann einerseits die Menge an nicht biologisch abbaubarem Klebstoff gering gehalten werden. Auf der anderen Seite ist eine solche Beimengung ausreichend, um auch bei Durchfeuchtung der Klebestelle eine gute Klebewirkung aufrechtzuhalten.

Nach einer anderen vorteilhaften Ausgestaltung weisen die Klebebereiche des Sackmaterials keine die Klebehaftung vermindernden Beschichtungen auf. Typischerweise führen z. B. wasserabweisende Beschichtungen zu einer verminderten Klebewirkung von Stärkeleim. In bevorzugter Ausgestaltung ist daher vorgesehen, dass die Klebebereiche des Sackmaterials nicht mit derartigen, die Klebehaftung vermindernden Beschichtungen versehen sind. Die Aussparung der Klebebereiche erlaubt es, die übrigen Bereiche der betroffenen Oberflächen mit einer wasserabweisenden und / oder andersartigen Beschichtung zu versehen, z. B. die Innenseite der innersten Materiallage.

In einer anderen Ausgestaltung ist vorgesehen, dass Klebebereiche des Sackmaterials, die mit einer die Klebehaftung vermindernden Beschichtung versehen sind, mit einer wasserbeständigen Klebstoffkomponente verklebt sind. Wasserbeständige Klebstoffe erzielen typischerweise auch bei wasserabweisend beschichteten Oberflächen eine gute Klebewirkung. Daher ist es besonders vorteilhaft, wenn derartige Klebstoffkomponenten in wasserabweisend beschichteten Bereichen eingesetzt werden.

In einer anderen bevorzugten Ausgestaltung ist die Innenseite der innersten Papierlage und/oder die Innenseite des Innenriegels mit einem Fungizid behandelt. Damit kann Schimmelbildung im Sackmaterial und im Füllgut vermieden werden.

Dabei handelt es sich vorteilhafterweise um ein natürliches Fungizid. Ebenfalls vorteilhaft ist der Auftrag einer antimikrobiell wirkenden Substanz.

In einer anderen bevorzugten Ausgestaltung ist die Innenseite der innersten Papierlage und/oder die Innenseite des Innenriegels mit einem alkalischen Auftrag versehen. Blumenerde ist häufig sauer, d. h. hat einen pH-Wert unter 7. Die in Blumenerde enthaltene Säure kann das Sackpapier angreifen bzw. zersetzen. Dem kann erfindungsgemäß mit einem alkalischen Auftrag auf der Innenseite der innersten Papierlage entgegengewirkt werden. Der alkalische Auftrag kann beispielsweise im Streichverfahren aufgebracht werden. Möglich ist auch eine alkalische Beschichtung mit Kreide oder Kalk, z. B. im Wege des Aufdruckens einer wässrigen Kreidelösung auf die Innenseite der innersten Papierlage. Besonders bevorzugt wird die Innenseite der innersten Papierlage mit verdunkelnder Farbe versehen, mit einem vorzugsweise natürlichen Fungizid behandelt und antimikrobiell und alkalisch beschichtet. Alternativ kann die verdunkelnde Farbe auch auf der Innenseite einer weiter außen liegenden Materiallage aufgebracht werden.

In einer anderen bevorzugten Ausgestaltung sind wasserabweisende Papierbeschichtungen als kunststofffreie Beschichtungen ausgeführt. Als derartige kunststofffreie Beschichtungen kommen beispielsweise Öle oder Fette in Betracht. Mit derartigen kunststofffreien wasserabweisenden Beschichtungen kann eine höhere Umweltfreundlichkeit der erfindungsgemäßen Säcke erreicht werden. Vorteilhafterweise können die wasserabweisenden Papierbeschichtungen auch biologisch abbaubar, kompostierbar und / oder recyclingfähig ausgebildet sein.

Besonders bevorzugt ist vorgesehen, dass der erfindungsgemäße Sack neben den Materiallagen aus Papier keine Materiallagen aus einem anderen Material aufweist. Besonders bevorzugt ist der erfindungsgemäße als zweilagiger Sack aus zwei Papierlagen oder als dreilagiger Sack aus drei Papierlagen ausgebildet. Mit dem zweilagigen Sack kann ein materialsparender umweltfreundlicher Papiersack bereitgestellt werden, während mit dem dreilagigen Papiersack eine höhere Festigkeit und Stabilität erreicht werden kann.

In einer anderen bevorzugten Ausgestaltung sind alle Materiallagen des Sackes aus Papier oder vergleichbar biologisch abbaubaren Materialien.

Vorteilhafterweise ist der erfindungsgemäße Sack vollständig kompostierbar und/oder recycelbar. Ein solcher Sack kann beispielsweise vom Verbraucher direkt in umweltschonender Weise auf dem hauseigenen Kompost entsorgt werden.

In einer weiter bevorzugten Ausgestaltung ist der erfindungsgemäße Sack als dreilagiger Papiersack ausgebildet, wobei die äußerste und die innerste Materiallage auf ihrer Außenseite mit einer wasserabweisenden Schicht versehen sind. Die Mittellage eines derartigen Sackes kann aus einem besonders starken Kraftpapier gebildet sein. Bei einem derartigen Sackaufbau wird die Festigkeit und Stabilität des Sackes vorwiegend durch die mittlere Materiallage bereitgestellt, während die Beschichtungen auf der innersten und auf der äußersten Materiallage dafür sorgen, dass die mittlere Materiallage nicht von außen oder innen feucht bzw. durchweicht wird und dadurch an Stabilität verliert. Vorteilhafterweise kann die verdunkelnde Farbe auf der Innenseite der Mittellage aufgebracht sein.

Der erfindungsgemäße Sack kann als Sack mit nur einem Boden ausgebildet sein, der oben offen ist und durch diese Öffnung befüllt wird. Die Öffnung kann nach Befüllung z. B. durch Vernähen oder Verkleben geschlossen werden.

In einer anderen bevorzugten Ausgestaltung kann neben dem einen Boden am anderen Ende des Schlauchstücks ein weiterer Boden ausgebildet sein, so dass der Sack zwei gegenüberliegende Böden aufweist. In einen der Böden kann vorteilhafterweise ein Ventil zur Befüllung des Sacks eingesetzt sein. In dem weiteren Boden kann ebenfalls ein Innenriegel eingesetzt sein.

Die Erfindung umfasst auch die Verwendung eines Papiersackes zur Verpackung von Blumenerde oder ähnlich feuchten Schüttgütern. Nach verbreiteter Ansicht in der Fachwelt können feuchte Schüttgüter nicht in Papiersäcken verpackt werden, weil die Feuchtigkeit des Füllguts die Papiersäcke durchweicht, so dass keine hinreichende Stabilität gewährleistet ist. Im Rahmen der Erfindung wurde herausgefunden, dass es entgegen der verbreiteten Ansicht gleichwohl möglich ist, feuchte Schüttgüter wie Blumenerde zuverlässig in Papiersäcken zu verpacken. Erfindungsgemäß umfasst die Erfindung die Verwendung eines Papiersacks nach einem der Ansprüche 1 - 11 zur Verpackung von Blumenerde oder ähnlich feuchten Schüttgütern.

Ausführungsbeispiele der Erfindung sind anhand der nachstehenden Figuren näher erläutert. Dabei zeigen:
- Fig. 1:: Den Grundaufbau eines zweilagigen Schlauchstücks für die Herstellung eines erfindungsgemäßen Sackes
- Fig. 2:: Ein zweilagiges Schlauchstück für die Herstellung eines erfindungsgemäßen Sackes
- Fig. 3:: Den offenen Kreuzboden eines erfindungsgemäßen Sackes mit eingesetztem Innenriegel
- Fig. 4:: Einen Innenriegel mit Klebekontur
- Fig. 5:: Einen oben offenen erfindungsgemäßen zweilagigen Sack
- Fig. 6:: Einen erfindungsgemäßen zweilagigen Sack mit zwei gegenüberliegenden Böden, von denen der obere als Ventilboden ausgebildet ist
- Fig. 7:: Ein dreilagiges Schlauchstück für die Herstellung eines erfindungsgemäßen Sackes
- Fig. 8:: Einen oben offenen erfindungsgemäßen dreilagigen Sack

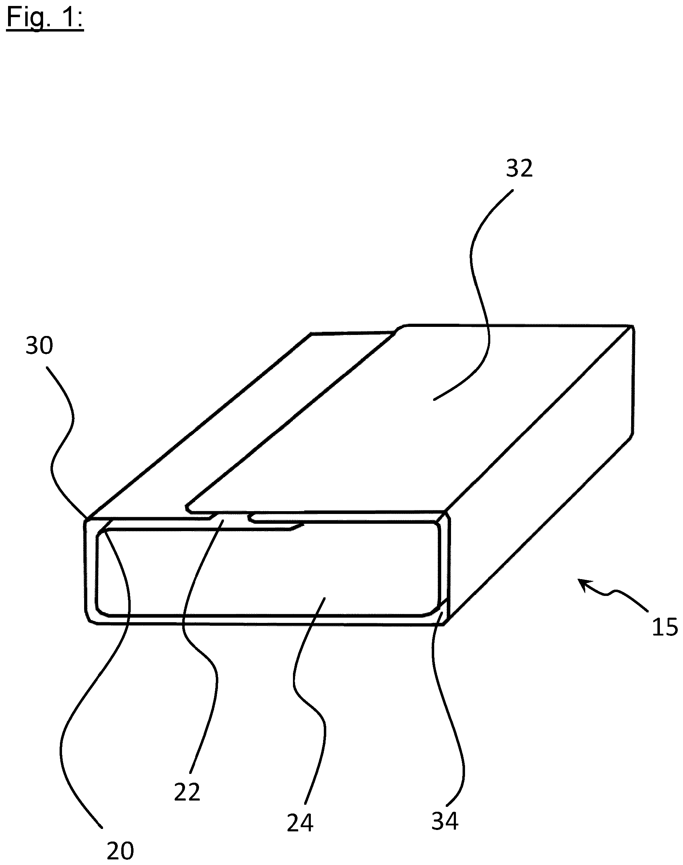

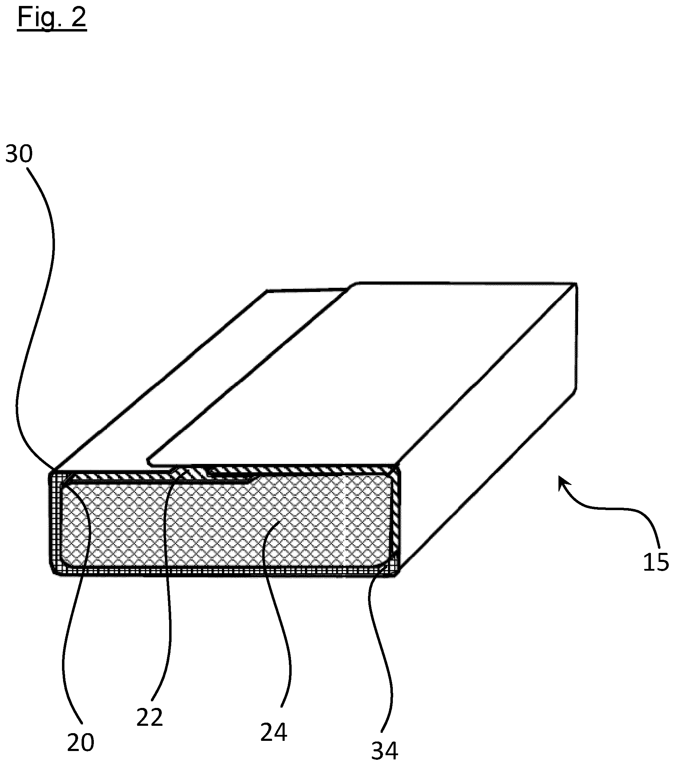

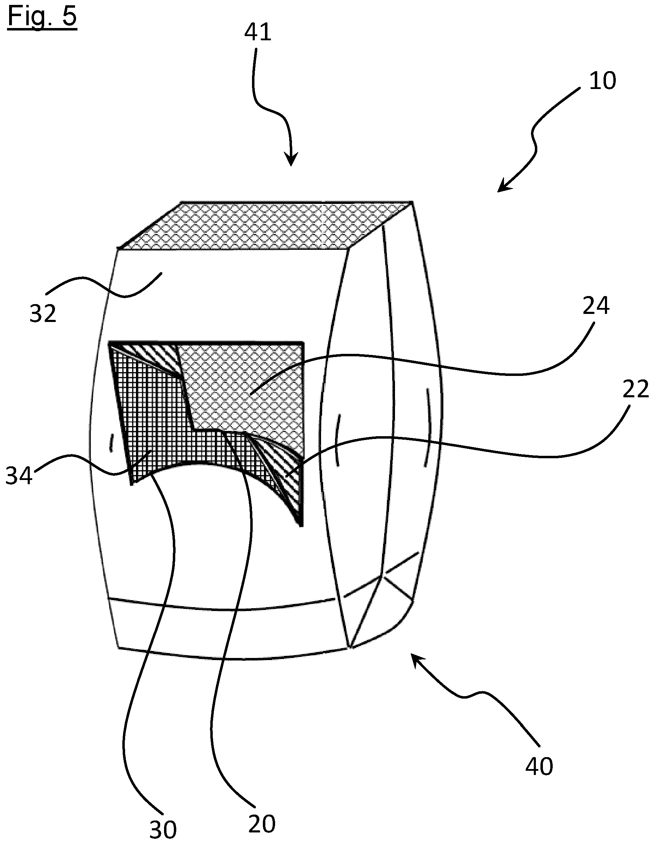

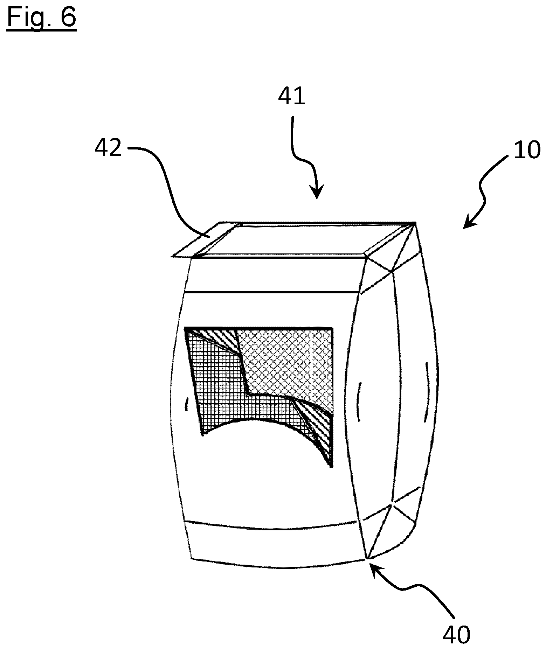

Figur 1 zeigt den Grundaufbau eines zweilagigen Schlauchstücks 15 zur Herstellung der in Figuren 5 und 6 gezeigten erfindungsgemäßen Säcke 10. Das in Figur 1 gezeigte Schlauchstück 15 ist aus einer Innenlage 20 und einer Außenlage 30 aus Papier gebildet, wobei die Innenlage 20 eine dem Sackinneren abgewandte Außenseite 22 und eine dem Sackinneren zugewandte Innenseite 24 aufweist. Die Außenlage 30 weist eine dem Sackinneren abgewandte Außenseite 32 und eine dem Sackinneren zugewandte Innenseite 34 auf. Wie in Figur 2 veranschaulicht, ist die Außenseite 22 der Innenlage 20 bei diesem Ausführungsbeispiel vollflächig mit einer wasserabweisenden PE-Beschichtung versehen, die in Figur 2 mit linierter Schraffur dargestellt ist. Die Innenseite 24 der Innenlage 20 ist mit einem alkalischen Auftrag und mit einem Fungizid versehen, wie in Figur 2 mit schräg gekreuzter Schraffur dargestellt. Die Innenseite 34 der Außenlage 30 ist mit schwarzer Farbe bedruckt, wie in Figur 2 mit senkrecht und waagrecht gekreuzter Schraffur dargestellt. In einer alternativen Ausgestaltung kann der alkalische Auftrag auf der Innenseite 24 Innenlage 20 entfallen. In dieser Ausgestaltung kann die Innenseite 24 der Innenlage 20 zusätzlich oder anstelle der Innenseite 34 der Außenlage 30 mit schwarzer Farbe bedruckt sein.

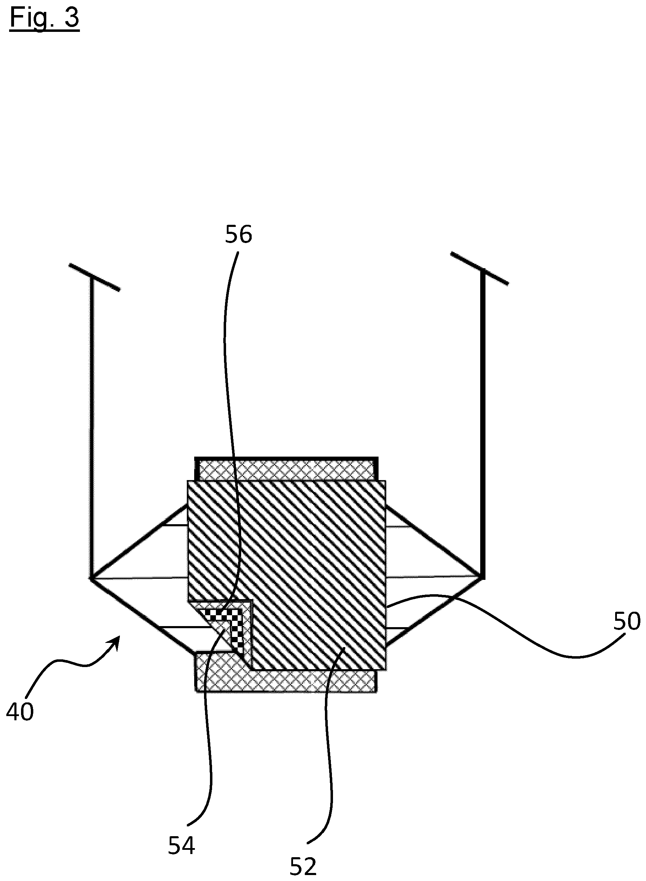

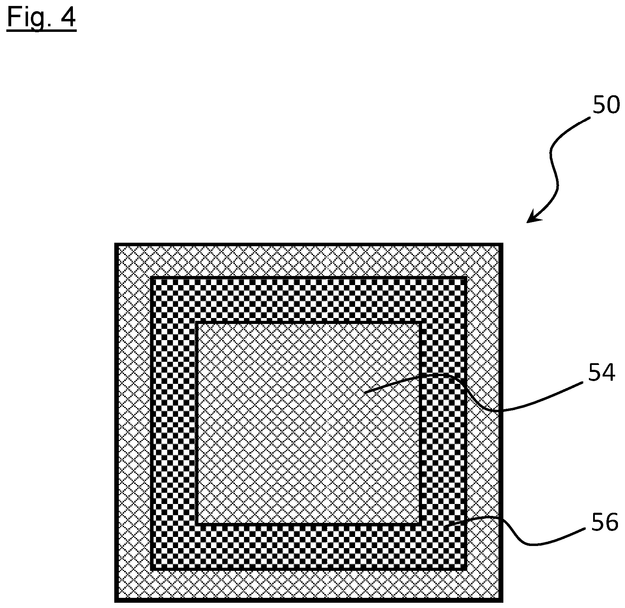

Figur 3 zeigt den offenen Kreuzboden 40 eines erfindungsgemäßen Sackes, in den ein Innenriegel 50 eingesetzt ist. Die auf dem offenen Kreuzboden 40 aufliegende, dem Sackinnenraum zugewandte Innenseite 54 des Innenriegels 50 ist in Figur 4 veranschaulicht. Auf der schräg gekreuzt schaffierten Innenseite 54 ist der Innenriegel mit einem alkalischen Auftrag und zusätzlich mit einem Fungizid versehen, um Säurefraß und Schimmelbildung im Füllgut und im Sackmaterial zu vermeiden. Des Weiteren ist die Innenseite 54 mit einer rahmenförmigen Klebekontur 56 versehen, um den Innenriegel 50 in den offenen Kreuzboden 40 des erfindungsgemäßen Sackes 10 einzukleben. Auf der dem Sackinnenraum abgewandten Außenseite 52 ist der Innenriegel 50 mit einer wasserabweisenden Beschichtung versehen, die in Fig. 3 in schräg linierter Schraffur dargestellt ist.

Figur 5 zeigt einen erfindungsgemäßen zweilagigen Sack 10 mit einem geschlossenen Kreuzboden 40 als Standboden. An der dem Boden gegenüberliegenden Oberseite 41 ist der Sack zur Befüllung geöffnet. Nach Befüllung des Sacks 10 mit Blumenerde kann die geöffnete Oberseite 41 durch Vernähung geschlossen werden. Die Innenlage 20 des Papiersacks 10 ist auf ihrer Innenseite 24 mit einem alkalischen Auftrag und mit einem Fungizid versehen und auf ihrer Außenseite 22 wasserabweisend mit PE beschichtet. Die Innenlage 20 und die Außenlage 30 bestehen aus Papier. Die Außenlage 30 ist auf ihrer Innenseite 34 schwarz bedruckt. Auf der Außenseite 32 kann die Außenlage 30 ebenfalls bedruckt und/oder beschichtet sein, z. B. mit einer PE-Beschichtung.

Figur 6 zeigt eine Variante eines erfindungsgemäßen Sackes 10, bei dem an der dem Standboden 40 gegenüberliegenden Oberseite 41 ebenfalls ein Kreuzboden ausgebildet ist, in den ein Ventil 42 zur Befüllung des Sacks eingesetzt ist.

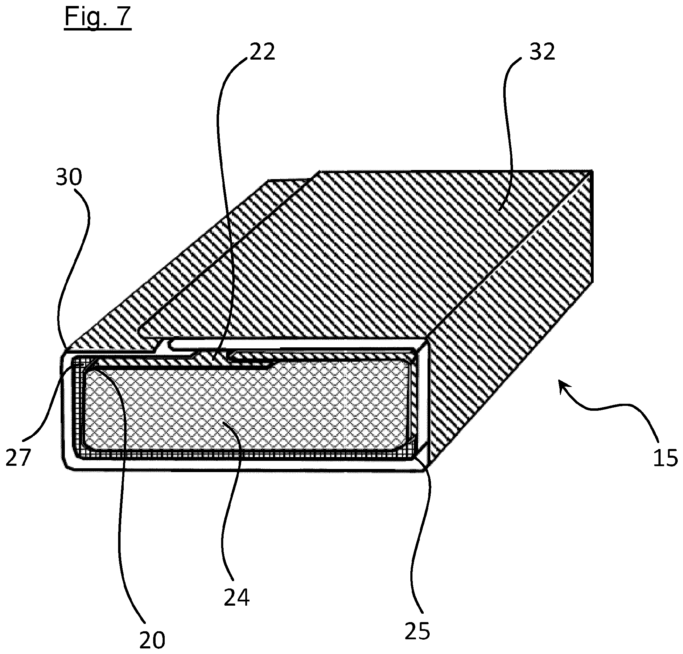

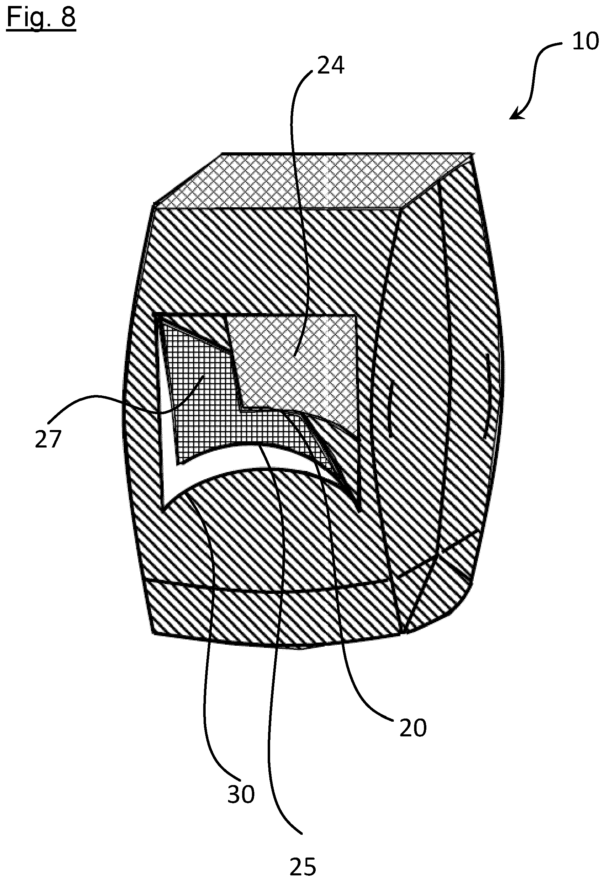

Figur 7 zeigt ein dreilagiges Schlauchstück 15 zur Herstellung eines erfindungsgemäßen dreilagigen Sackes 10, welcher in Figur 8 näher veranschaulicht ist. Die Innenlage 20 ist auf ihrer Innenseite 24 mit einem alkalischen Auftrag und mit einem Fungizid versehen. Des Weiteren sind Innenlage 20 und Außenlage 30 jeweils auf ihren Außenseiten 22 und 32 mit einer wasserabweisenden PE-Beschichtung versehen. Zwischen Innenlage 20 und Außenlage 30 des Sackes befindet sich die Zwischenlage 25, die aus Papier besteht, welches auf seiner Innenseite 27 schwarz bedruckt ist. Durch die gegenüber einem zweilagigen Sack zusätzliche Materiallage kann die Stabilität und Festigkeit des Sacks erhöht werden. In einer Alternativen Ausgestaltung kann der alkalische Auftrag auf der Innenseite 24 der Innenlage 20 entfallen.

Mit dem erfindungsgemäßen Papiersack kann feuchte Blumenerde umweltfreundlich und gut handhabbar verpackt werden, wobei die Produkteigenschaften der eingefüllten Blumenerde über relevante Zeiträume von einigen Wochen bis Monaten stabil gehalten werden können. Insbesondere wird mit der schwarzen Bedruckung auf der Innenseite lichtinduzierte biologische Aktivität in der Blumenerde vermindert. Das auf der Innenseite aufgebrachte Fungizid verhindert Schimmelbildung in der Blumenerde und auch im Sackmaterial. Die wasserabweisende PE-Beschichtung auf der Außenseite der Innenlage verhindert einerseits eine Austrocknung der eingefüllten Blumenerde und andererseits das Eindringen von zusätzlicher Feuchtigkeit von außen, was die eingefüllte Blumenerde schwerer machen würde. Durch die Verhinderung des Wasseraustritts aus der Blumenerde kann zudem die Außenlage des Sackmaterials trocken und stabil gehalten werden.

## Patentansprüche

1. Papiersack (10) für Blumenerde oder vergleichbar feuchte Schüttgüter, gebildet aus einem mindestens zwei Papierlagen (20, 25, 30) umfassenden Schlauchstück (15), wobei der Sack (10) an einem Ende des Schlauchstücks einen Kreuz- oder Blockboden (40) aufweist, wobei die Verklebungen des Sackes (10) mit biologisch abbaubarem Klebstoff gebildet sind, **dadurch gekennzeichnet, dass** die innerste Papierlage (20) des Schlauchstücks (15) auf ihrer Außenseite (22) eine wasserabweisende Beschichtung, vorzugsweise eine PE-Beschichtung, aufweist, und mindestens eine der Papierlagen (20, 25, 30) mindestens auf ihrer Innenseite (24, 27, 34) eine verdunkelnde, vorzugsweise schwarze Färbung aufweist.

2. Papiersack nach dem vorhergehenden Anspruch, **dadurch gekennzeichnet, dass** in den Boden (40) ein vorzugsweise aus Papier gebildeter Innenriegel (50) eingesetzt ist, wobei der Innenriegel (50) auf der dem Sackinnenraum abgewandten Außenseite (52) mit einer wasserabweisenden Beschichtung, vorzugsweise einer PE-Beschichtung, versehen ist und/oder der Innenriegel mindestens auf seiner dem Sackinnenraum zugewandten Innenseite (54) eine verdunkelnde, vorzugsweise schwarze Färbung, aufweist.

3. Papiersack nach einem der vorhergehenden Ansprüche, **dadurch gekennzeichnet, dass** der biologisch abbaubare Klebstoff Stärkeleim, vorzugsweise Kartoffelstärkeleim, enthält und / oder dem biologisch abbaubaren Klebstoff ein feuchtigkeitsstabil verklebendes Additiv, vorzugsweise Dispersionsleim, beigemengt ist.

4. Papiersack nach dem vorhergehenden Anspruch, **dadurch gekennzeichnet, dass** das feuchtigkeitsstabil verklebende Additiv dem biologisch abbaubaren Klebstoff mit einem Anteil von höchstens 10 Gewichts-%, bevorzugt höchstens 7 Gewichts-%, beigemengt ist.

5. Papiersack nach einem der vorhergehenden Ansprüche, **dadurch gekennzeichnet, dass** die Klebebereiche des Sackmaterials keine die Klebehaftung vermindernden Beschichtungen aufweisen und/oder mit einer wasserbeständigen Klebstoffkomponente verklebt sind.

6. Papiersack nach einem der vorhergehenden Ansprüche, **dadurch gekennzeichnet, dass** die mit dem Füllgut in Kontakt stehenden Innenseite (24) der innersten Papierlage (20) und / oder die Innenseite (54) des Innenriegels (50) mit einem vorzugsweise natürlichen Fungizid und / oder einer antimikrobiell wirkendenden Substanz behandelt und / oder einem alkalischen Auftrag versehen sind.

7. Papiersack nach einem der vorhergehenden Ansprüche, **dadurch gekennzeichnet, dass** die wasserabweisenden Papierbeschichtungen als kunststofffreie, biologisch abbaubare, kompostierbare und / oder recyclingfähige Beschichtungen ausgeführt sind.

8. Papiersack nach einem der vorhergehenden Ansprüche, **dadurch gekennzeichnet, dass** alle Materiallagen (20, 25, 30) des Sackes aus Papier und / oder vergleichbar biologisch abbaubaren Materialien bestehen.

9. Papiersack nach einem der vorhergehenden Ansprüche, **dadurch gekennzeichnet, dass** der Sack vollständig kompostierbar und/oder recycelbar ist.

10. Papiersack nach einem der vorhergehenden Ansprüche, **dadurch gekennzeichnet, dass** der Sack als dreilagiger Papiersack ausgebildet ist, wobei die äußerste Materiallage (30) vorzugsweise auf ihrer Außenseite mit einer wasserabweisenden, biologisch abbaubaren, kompostierbaren und / oder recyclingfähigen Beschichtung versehen ist.

11. Papiersack nach einem der vorhergehenden Ansprüche, **dadurch gekennzeichnet, dass** der Sack an einem Ende des Schlauchstücks durch Vernähung geschlossen ist oder an beiden Enden des Schlauchstücks ein Boden ausgebildet ist, vorzugsweise ein Kreuz- oder Blockboden, wobei vorzugsweise in einem Boden ein Ventil zur Befüllung des Sackes eingesetzt ist.

12. Verwendung eines Papiersacks nach einem der Ansprüche 1 - 11 zur Verpackung von Blumenerde oder ähnlich feuchten Schüttgütern.

## Claims

1. A paper bag (10) for potting soil or comparable moist bulk materials, formed from a tubular piece (15) comprising at least two paper layers (20, 25, 30), wherein at one end of the tubular piece the bag (10) has a cross bottom or block bottom (40), wherein the bonds of the bag (10) are formed with biodegradable adhesive, **characterized in that** the innermost paper layer (20) of the tubular piece (15) has a water-repellent coating, preferably a PE coating, on its outer face (22), and at least one of the paper layers (20, 25, 30) has a darkening, preferably black colouring at least one its inner face (24, 27, 34).

2. The paper bag according to the foregoing claim, **characterized in that** an inner lining (50) preferably formed of paper is inserted into the bottom (40), wherein the inner lining (50) is provided with a water-repellent coating, preferably a PE coating, on the outer face (52) facing away from the interior of the bag and/or the inner lining has a darkening, preferably black colouring at least on its inner face (54) facing the interior of the bag.

3. The paper bag according to one of the foregoing claims, **characterized in that** the biodegradable adhesive contains starch glue, preferably potato starch glue, and/or a moisture-stable bonding additive, preferably dispersion glue, is admixed to the biodegradable adhesive.

4. The paper bag according to the foregoing claim, **characterized in that** the moisture-stable bonding additive is admixed to the biodegradable adhesive with a content of not more than 10% by weight, preferably not more than 7% by weight.

5. The paper bag according to one of the foregoing claims, **characterized in that** the bonding regions of the bag material have no coatings reducing the adhesion and/or are bonded with a water-resistant adhesive component.

6. The paper bag according to one of the foregoing claims, **characterized in that** the inner face (24) of the innermost paper layer (20) and/or the inner face (54) of the inner lining (50) in contact with the filling material are treated with a preferably natural fungicide and/or an antimicrobially acting substance and/or are provided with an alkaline application.

7. The paper bag according to one of the foregoing claims, **characterized in that** the water-repellent paper coatings are implemented as free of plastic, biodegradable, compostable and/or recyclable coatings.

8. The paper bag according to one of the foregoing claims, **characterized in that** all material layers (20, 25, 30) of the bag consist of paper and/or comparable biodegradable materials.

9. The paper bag according to one of the foregoing claims, **characterized in that** the bag is fully compostable and/or recyclable.

10. The paper bag according to one of the foregoing claims, **characterized in that** the bag is formed as a three-layer paper bag, wherein the outermost material layer (30) is preferably provided on its outer face with a water-repellent, biodegradable, compostable and/or recyclable coating.

11. The paper bag according to one of the foregoing claims, **characterized in that** the bag is closed at one end of the tubular piece by suture or a bottom is formed at both ends of the tubular piece, preferably a cross bottom or block bottom, wherein preferably a valve is inserted in one bottom for filling the bag.

12. Use of a paper bag according to one of claims 1 - 11 for packaging potting soil or similar moist bulk materials.

## Revendications

1. Sac en papier (10) destiné au terreau ou à des produits en vrac présentant une humidité comparable, formé d'une pièce tubulaire (15) comprenant au moins deux couches de papier (20, 25, 30), le sac (10) présentant, à une extrémité de cette pièce tubulaire, un fond en croix ou en bloc (40), les collages du sac (10) étant réalisés à l'aide d'une colle biodégradable, **caractérisé en ce que** la couche de papier la plus interne (20) de la pièce tubulaire (15) présente, sur sa face extérieure (22), un revêtement hydrofuge, de préférence un revêtement en PE, et au moins l'une des couches de papier (20, 25, 30) présente, au moins sur sa face intérieure (24, 27, 34), une coloration obscurcissante, de préférence noire.

2. Sac en papier selon la revendication précédente, **caractérisé en ce qu'**une barrière intérieure (50), de préférence en papier, est insérée dans le fond (40), la barrière intérieure (50) étant pourvue, sur la face extérieure (52) opposée à l'intérieur du sac, d'un revêtement hydrofuge, de préférence d'un revêtement en PE, et/ou que la barre intérieure présente, au moins sur sa face intérieure (54) tournée vers l'intérieur du sac, une coloration obscurcissante, de préférence noire.

3. Sac en papier selon l'une quelconque des revendications précédentes, **caractérisé en ce que** la colle biodégradable contient de la colle d'amidon, de préférence de la colle d'amidon de pomme de terre, et/ou **en ce qu'**un additif adhésif stable à l'humidité, de préférence de la colle en dispersion, est ajouté à la colle biodégradable.

4. Sac en papier selon la revendication précédente, **caractérisé en ce que** l'additif adhésif résistant à l'humidité est ajouté à la colle biodégradable à raison de 10 % en poids au maximum, de préférence 7 % en poids au maximum.

5. Sac en papier selon l'une quelconque des revendications précédentes, **caractérisé en ce que** les zones de collage du matériau du sac ne comportent aucun revêtement réduisant l'adhérence de la colle et/ou sont collées à l'aide d'un composant adhésif résistant à l'eau.

6. Sac en papier selon l'une quelconque des revendications précédentes, **caractérisé en ce que** la face intérieure (24) de la couche de papier la plus interne (20) en contact avec le produit de remplissage et/ou la face intérieure (54) de la bande intérieure (50) sont traitées avec un fongicide de préférence naturel et/ou une substance à action antimicrobienne et/ou recouvertes d'un enduit alcalin.

7. Sac en papier selon l'une quelconque des revendications précédentes, **caractérisé en ce que** les revêtements hydrofuges du papier sont réalisés sous forme de revêtements sans plastique, biodégradables, compostables et/ou recyclables.

8. Sac en papier selon l'une quelconque des revendications précédentes, **caractérisé en ce que** toutes les couches de matériau (20, 25, 30) du sac sont constituées de papier et/ou de matériaux biodégradables comparables.

9. Sac en papier selon l'une quelconque des revendications précédentes, **caractérisé en ce que** le sac est entièrement compostable et/ou recyclable.

10. Sac en papier selon l'une quelconque des revendications précédentes, **caractérisé en ce que** le sac est conçu comme un sac en papier à trois couches, la couche de matériau la plus externe (30) étant de préférence pourvue, sur sa face extérieure, d'un revêtement hydrofuge, biodégradable, compostable et/ou recyclable.

11. Sac en papier selon l'une quelconque des revendications précédentes, **caractérisé en ce que** le sac est fermé à une extrémité de la pièce tubulaire par couture ou **en ce qu'**un fond est formé aux deux extrémités de la pièce tubulaire, de préférence un fond en croix ou un fond en bloc, une soupape étant de préférence insérée dans l'un des fonds pour permettre le remplissage du sac.

12. Utilisation d'un sac en papier selon l'une quelconque des revendications 1 à 11 pour l'emballage de terreau ou de produits en vrac présentant une humidité similaire.
